# EUROPEAN PATENT APPLICATION

(11) **EP 1 629 923 A2**
(43) Date of publication of application: **01.03.2006**
(21) Application number: 05018672.5
(22) Date of filing: 29.08.2005
(51) Int. Cl.: B23K 9/02, B23K 9/23

(54) **Process for electric arc welding of low and high alloy tempered and untempered steels and of dissimilair metals, for obtaining a certain grain structure without thermal treatment**

(30) Priority: 31.08.2004 BR 0403851
(71) Applicant: Guth, Bela, Lauro de Freitas BA (BR)
(72) Inventor: Guth, Bela, Lauro de Freitas BA (BR)
(74) Representative: Wagner, Wolfgang Heribert

(57) **Abstract**

Patent of Invention referring to a PROCESS FOR CAPILLARY ELECTRIC WELDING OF LOW AND HIGH ALLOY STEELS, WHETHER TEMPERED OR NOT, AND BIMETALS, FOR OBTAINING A CERTAIN TEXTURE WITH NO THERMAL TREATMENT, in which the first layer (1) is intended to coat the chamfer and the chamfer's root with the electrode for the crystallization of the deposited weld, said weld being appropriate for obtaining the austenite plus ferrite texture. With the second layer (2), the chamfer's filling is obtained using the electrode for the crystallization of the deposited weld, thus obtaining a perlite or perlite plus troostite texture, while in the third and fifth layers (3, 5), an electrode for the crystallization of the deposited weld is used for obtaining an austenite plus ferrite texture. In the fourth layer (4), an electrode for the crystallization of the deposited weld is used for obtaining a sorbite plus bainite texture. In the sixth layer (6), an electrode for the crystallization of the deposited weld is used for obtaining a bainite texture.

## Description

This report relates to a process for capillary electric welding of low and high alloy steels, whether tempered or not, and bimetals, for obtaining a certain texture with no thermal treatment.

As known by those skilled in the art, when welding tempered steel, alloy steel, high alloy steel, high-carbon forged steel, bimetallic union (welding two different metals, for example, stainless steel with carbon to steel), steel-manganese, Hadfield steel and so on, a conventional thermal treatment system is required before, during and/or after welding in order to normalize the undesired crystallization of the applied martensitic and thick weld, checked at the so-called Affected Transition Zone or Thermally Affected Zone. Said thermal treatment significantly increases the final product cost.

Additionally, the part size often prevents the thermal treatment, and, therefore, the welded portion becomes very hard and cannot bear the part's dynamic stress requirements, thus causing fissures and cracks, sometimes causing its breakage.

The low temperature welding process to weld all kinds of steels, their alloys, bimetals and also melted steels, as presented in this invention, includes the choice of the appropriate deposited weld crystallization, the electrodes application system and the correct use of the deposited weld, observing the part temperature during welding, aiming to eliminate the undesired martensitic thick crystals and to avoid recrystallization at the Weld Transition Zone, also called Affected Transition Zone (ATZ). The new process of the present invention includes four kinds of electrodes when choosing the appropriate deposited weld crystallization, such as an electrode having the following types of appropriate deposited weld crystallization: austenite plus ferrite; perlite or perlite plus troostite; sorbite plus bainite; and bainite. These electrodes have never been used for welding temperable steels or Hadfield steel, high-carbon steel, high alloy steels and bimetals, with no thermal treatment.

Therefore, the mechanical and physical characteristics of the base material are preserved and the deposited weld remains machinable, thus allowing the most important mechanical projects to be changed when alloy steels of the SAE 4140, 4330, 4345 and other types are used.

The current process called "low temperature welding", eliminates martensitic thick crystals and avoids recrystallization in the Weld Transition Zone, also called Affected Transition Zone (ATZ) and requires no subsequent thermal treatment without hardening the deposited weld, not changing the_ physical characteristics of the base material, thus allowing subsequent machining of the deposited material due to the absence of martensitic thick crystals and consequent adequate hardness of said deposited metal.

The invention will be now described in detail with reference to the preferred embodiment showed in the attached drawings as follows.

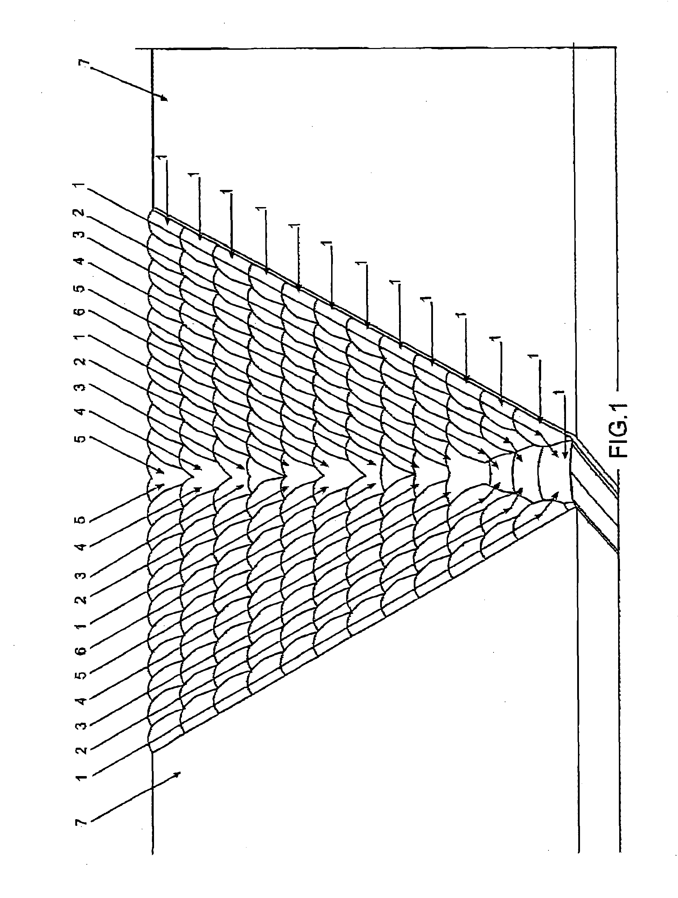

Figure 1 depicts a union made according the proposed invention;

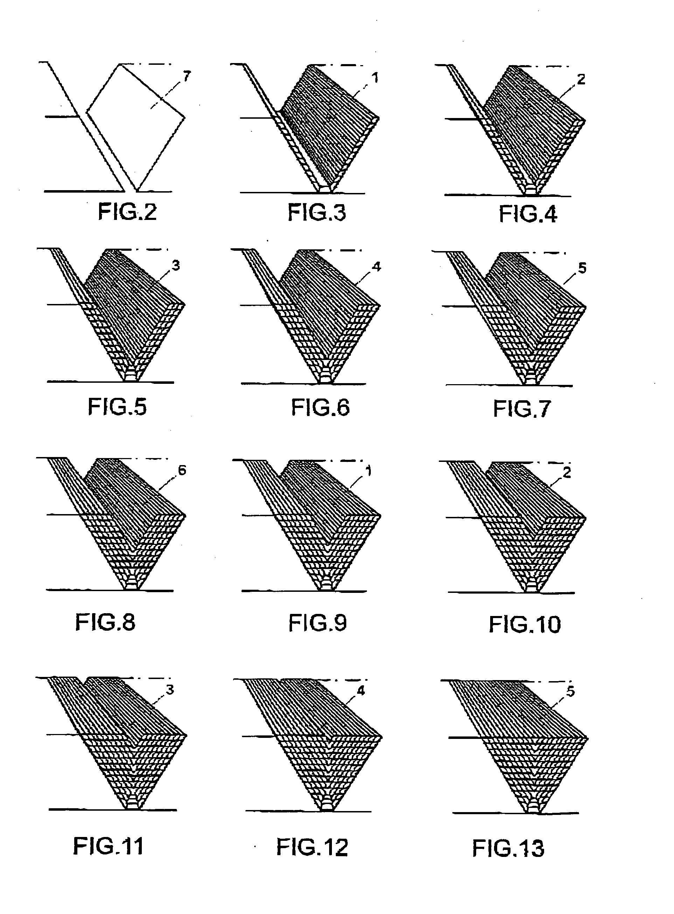

Figures 2 to 13 depict the different layers of the chamfer filling; and

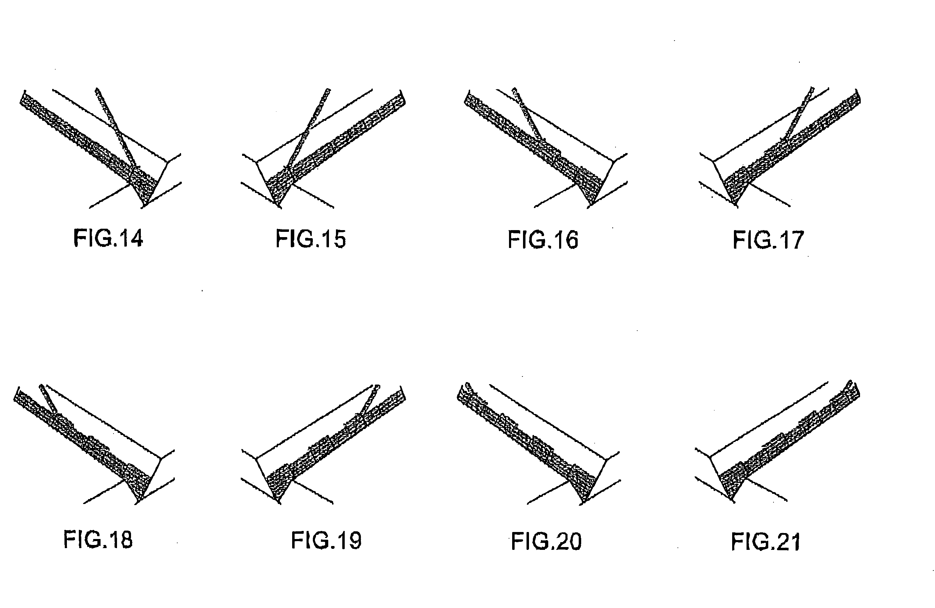

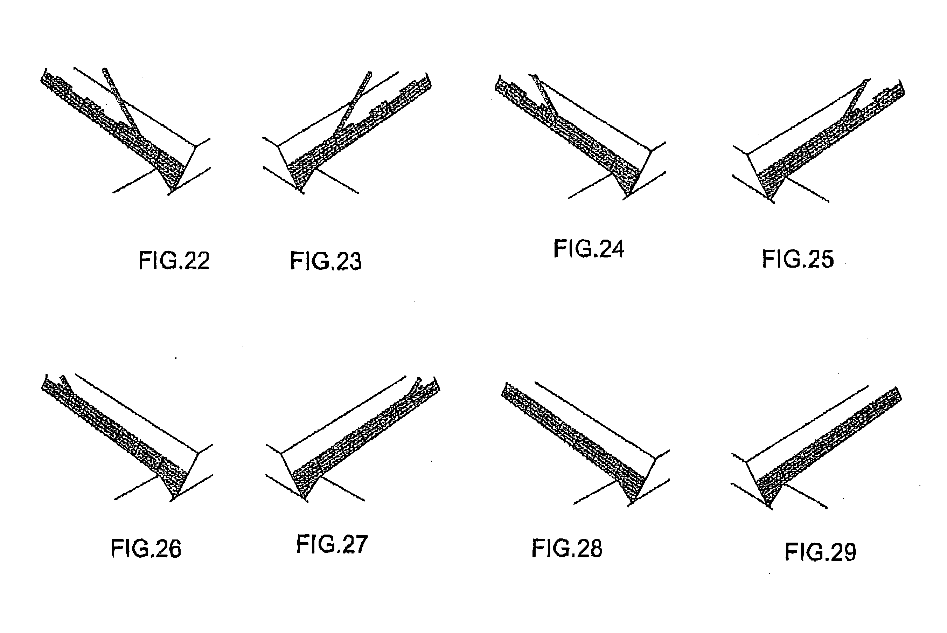

Figures 14 to 29 show how the weld cords segments are interposed.

The invention consists in using electrodes for capillary electric welding with specific characteristics for welding all kinds of steels, such as low and high alloy steels and temperable or tempered steels, high-carbon steel or steel-manganese (Hadfield) or SAE-4140 steel, the parts should be chamfered as per the chamfer standard X, U or V, regardless of its thickness. It is not necessary to know the chemical composition of the material or materials to be welded when working with different parts, for example, bimetals. Welding of a properly chamfered part (7) is started by using a type of electrode for the crystallization of the austenitic and ferritic deposited weld, as follows:

In the first layer (1), both sides of the chamfer are coated, including its root, using electrodes for the crystallization of the appropriate deposited weld for obtaining an austenitic plus ferritic-type texture, stippling the parts to fasten them with the same electrode.

In the second layer (2), an electrode for the crystallization of the appropriate deposited weld is used for obtaining a perlite or perlite plus troostite-type texture. In the third layer (3), an electrode for the crystallization of the appropriate deposited weld is used for obtaining an austenite-type texture. In the fourth layer (4), a crystallization electrode for the appropriate deposited weld is used for obtaining a sorbite plus bainite-type texture.

In the fifth 5 layer (5), an electrode for the crystallization of the appropriate deposited weld is used for obtaining an austenite plus ferrite-type texture. In the sixth layer (6), an electrode for the crystallization of the appropriate deposited weld is used for obtaining a bainite-type texture.

Since the welded part is thicker than 25 millimeters, the first layer (1) is applied again with an electrode for the crystallization of the deposited weld for obtaining an austenite plus ferrite texture, and subsequently the second, third, fourth, fifth and sixth layers (2, 3, 4 ,5 and 6), with their corresponding texture characteristics previously described, until the chamfer filling is completed, not requiring the application of all six layers (1, 2, 3, 4. 5 and 6) for completely filling the chamfer; however, it is necessary to check the layers order specified above. The length of each weld fillet should be around 10 cm of applied weld, being interpose instead of continuous fillet.

In brief, the first layer (1) is intended to coat the chamfer and the chamfer's root with the electrode for the crystallization of the deposited weld, said weld being appropriate for obtaining the austenite plus ferrite texture. With the second layer (2), the chamfer's filling is obtained using the electrode for the crystallization of the deposited weld, thus obtaining a perlite or perlite plus troostite texture, while in the third and fifth layers (3, 5), an electrode for the crystallization of the deposited weld is used for obtaining an austenite plus ferrite texture. In the fourth layer (4), an electrode for the crystallization of the deposited weld is used for obtaining a sorbite plus bainite texture. In the sixth layer (6), an electrode for the crystallization of the deposited weld is used for obtaining a bainite texture.

If additional layers are necessary, the required number of successive layers is applied in order to complete the chamfer or a desired volume not necessarily corresponding to the chamfer volume, the applied layers should not necessarily comprise all the abovementioned six layers, but must follow the application order defined in the present invention.

After applying all the desired layers, the part is machined (if required) in order to recover its original dimensions, without requiring the weld to be thermally treated for machining. The part temperature is limited to 100°C by the applied welding procedure, that is, interposed welding, each weld fillet having about 10 cm in length and the smallest width possible.

Although the present invention has been described as per a currently preferred embodiment, it is understood that the invention is not limited to this embodiment, since changes and modifications will be readily evident to those skilled in the art in the light of the preceding explanation. Therefore, the invention should be limited by the scope of the following claims.

## Claims

1. PROCESS FOR CAPILLARY ELECTRIC WELDING OF LOW AND HIGH ALLOY STEELS, WHETHER TEMPERED OR NOT, AND BIMETALS, FOR OBTAINING A CERTAIN TEXTURE WITH NO THERMAL TREATMENT, **characterized in that** it comprises the use of electrodes for capillary electric welding with specific characteristics for welding all kinds of steels, such as, low and high alloy steels and temperable or tempered steels, high-carbon steel or steel-manganese (Hadfield) or SAE-4140 steel, the parts should be chamfered as per the chamfer standard X, U or V, regardless of its thickness, it is not necessary to know the chemical composition of the material or materials to be welded when working with different parts, for example, bimetals, the following steps being defined: Welding of a properly chamfered part (7) is started by using a type of electrode for the crystallization of the austenitic and ferritic deposited weld, as follows:
In the first layer (1), both sides of the chamfer are coated, including its root, using electrodes for the crystallization of the appropriate deposited weld for obtaining an austenitic plus ferritic-type texture, stippling the parts to fasten them with the same electrode.
In the second layer (2), an electrode for the crystallization of the appropriate deposited weld is used for obtaining a perlite or perlite plus troostite-type texture.
In the third layer (3), an electrode for the crystallization of the appropriate deposited weld is used for obtaining an austenite-type texture. In the fourth layer (4), a crystallization electrode for the appropriate deposited weld is used for obtaining a sorbite plus bainite-type texture.
In the fifth 5 layer (5), an electrode for the crystallization of the appropriate deposited weld is used for obtaining an austenite plus ferrite-type texture. In the sixth layer (6), an electrode for the crystallization of the appropriate deposited weld is used for obtaining a bainite-type texture.

2. PROCESS FOR CAPILLARY ELECTRIC WELDING OF LOW AND HIGH ALLOY STEELS, WHETHER TEMPERED OR NOT, AND BIMETALS, FOR OBTAINING A CERTAIN TEXTURE WITH NO THERMAL TREATMENT**,** according to a claim 1, **characterized in that**, when the welded part is thicker than 25 millimeters, the first layer (1) is applied again with an electrode for the crystallization of the deposited weld for obtaining an austenite plus ferrite texture, and subsequently the second, third, fourth, fifth and sixth layers (2, 3, 4 ,5 and 6), with their corresponding texture characteristics previously described, until the chamfer filling is completed, not requiring the application of all six layers (1, 2, 3, 4, 5 and 6) for completely filling the chamfer; however, it is necessary to check the layers order specified above.

3. PROCESS FOR CAPILLARY ELECTRIC WELDING OF LOW AND HIGH ALLOY STEELS, WHETHER TEMPERED OR NOT, AND BIMETALS, FOR OBTAINING A CERTAIN TEXTURE WITH NO THERMAL TREATMENT, according to a claim 1, **characterized in that** the length of each weld fillet should be around 10 cm of applied weld, being interposed instead of continuous fillet.

4. PROCESS FOR CAPILLARY ELECTRIC WELDING OF LOW AND HIGH ALLOY STEELS, WHETHER TEMPERED OR NOT, AND BIMETALS, FOR OBTAINING A CERTAIN TEXTURE WITH NO THERMAL TREATMENT, according to a claim 1, **characterized in that**, after applying all the desired layers, the part is machined (if required) in order to recover its original dimensions, without requiring the weld to be thermally treated for machining.

5. PROCESS FOR CAPILLARY ELECTRIC WELDING OF LOW AND HIGH ALLOY STEELS, WHETHER TEMPERED OR NOT, AND BIMETALS, FOR OBTAINING A CERTAIN TEXTURE WITH NO THERMAL TREATMENT, according to a claim 1, **characterized in that** the part temperature is limited to 100°C by the applied welding procedure.
